# EUROPÄISCHE PATENTSCHRIFT

(11) **EP 3 479 007 B1**
(45) Veröffentlichungstag und Bekanntmachung des Hinweises auf die Patenterteilung: **31.07.2024**
(21) Anmeldenummer: 17734241.7
(22) Anmeldetag: 28.06.2017
(51) Int. Cl.: F17C 13/04

(54) **TANKVENTIL**
TANK VALVE
SOUPAPE DE RÉSERVOIR

(30) Priorität: 01.07.2016 DE 102016008107
(43) Veröffentlichungstag der Anmeldung: 08.05.2019
(73) Patentinhaber: cellcentric GmbH & Co. KG, 73230 Kirchheim unter Teck (DE)
(72) Erfinder: HAUSMANN, Philipp, 73230 Kirchheim (DE)
(74) Vertreter: Wallinger Ricker Schlotter Tostmann
(86) Internationale Anmeldenummer: PCT/EP2017/000764
(87) Internationale Veröffentlichungsnummer: WO 2018/001560

(56) Entgegenhaltungen:
- EP-A1- 1 801 487
- EP-A1- 2 857 727
- DE-A1- 4 334 182
- DE-C1- 10 065 268
- DE-T2- 69 818 366
- US-A- 5 458 151
- US-A- 5 941 268
- US-A1- 2008 289 700
- US-A1- 2009 288 723
- US-A1- 2014 239 207
- US-B1- 7 152 617

## Beschreibung

Die Erfindung betrifft ein Tankventil nach der im Oberbegriff von Anspruch 1 näher definierten Art. Außerdem betrifft die Erfindung die Verwendung eines derartigen Tankventils.

Ein Tankventil zur Montage an einem Druckgasbehälter ist aus dem allgemeinen Stand der Technik bekannt. Ein solches Tankventil wird auch häufig mit dem englischen Begriff On-Tank-Valve bzw. seiner Abkürzung OTV bezeichnet. Das Tankventil ist dabei ein Aufbau mit einem Grundkörper, welcher zumindest zwei Abschnitte aufweist, wobei ein erster Grundkörperabschnitt im montierten Zustand in den Druckgasbehälter ragt und dichtend mit diesem verbunden ist. Typischerweise ist dieser erste Grundkörperabschnitt über ein Außengewinde in ein Innengewinde einer korrespondierenden Aufnahme des Druckgasbehälters eingeschraubt. Neben diesem im montiertem Zustand innerhalb des Druckgasbehälters bzw. seines Anschlussgewindes liegenden ersten Grundkörperabschnitt hat der Grundkörper typischerweise einen zweiten Grundkörperabschnitt, welcher sich im montiertem Zustand außerhalb des Druckgasbehälters befindet. Einer oder typischerweise beide der Grundkörperabschnitte weisen nun sogenannte Funktionsuntergruppen auf, welche zur Realisierung der Funktionalität des Tankventils notwendig sind. Derartige Funktionsuntergruppen können beispielsweise ein Entnahmeventil, ein Rückschlagventil in einer Betankungsleitung, ein Sicherheitsventil, ein (manuelles) Absperrventil, ein Filter, eine Anschlussbuchse für eine Betankungs- und/oder Entnahmeleitung oder Ähnliches sein.

Beispielhaft soll hinsichtlich eines derartigen Tankventils auf die JP 2009-168165 A hingewiesen werden, welche ein solches unter der Bezeichnung Hochdruckventil zeigt. Weitere derartige Ventile sind beispielsweise aus der US 2009/0146094 A1 oder in der Ausgestaltung als Pilotventil auch aus der EP 1 682 801 B1 bekannt.

Aus dem Dokument EP 2 857 727 ist eine Fluidsteuerventilanordnung zum Steuern eines Flusses eines Quellgases bekannt, wenn das Quellgas in einen Hochdruckbehälter geladen und/oder einem Gasverbraucher wie beispielsweise einem Gasmotor zugeführt wird.

Druckgasbehälter mit derartigen Tankventilen werden häufig in Kraftfahrzeugen zur Speicherung von gasförmigen Brennstoffen, beispielsweise Erdgas oder Wasserstoff, eingesetzt. Bei Fahrzeuganwendungen spielen dabei immer die Sicherheit und der Crashschutz eine entscheidende Rolle. Bei den herkömmlichen aufgebauten Tankventilen befinden sich zahlreiche Funktionsuntergruppen in dem außerhalb des Druckgasbehälters liegenden zweiten Grundkörperabschnitt, insbesondere da das Bauvolumen für den ersten Grundkörperabschnitt durch den Durchmesser des Gewindes des Druckgasbehälters typischerweise begrenzt ist. Im Falle eines Unfalls mit dem Fahrzeug oder einer andersartigen Beeinträchtigung des Druckgasbehälters durch einen Unfall, was prinzipiell auch außerhalb eines Fahrzeugs auftreten kann, kann es somit zu sicherheitskritischen Situationen kommen, bei welchen sich der Druckgasbehälter unkontrolliert entleeren kann, oder bei welchen er sich aufgrund abgescherter Sicherheitsventile oder dergleichen eben nicht mehr entleeren kann. Kommt es in einer solchen Situation zu einer extremen Wärmeentwicklung, beispielsweise durch einen Brand, dann kann der mit dem beschädigten Tankventil ausgestattete Druckgasbehälter explodieren.

Die Aufgabe der hier vorliegenden Erfindung besteht nun darin, den genannten Nachteil zu vermeiden und einen sicheren Aufbau eines Tankventils anzugeben.

Erfindungsgemäß wird diese Aufgabe durch ein Tankventil mit den Merkmalen im kennzeichnenden Teil des Anspruchs 1 gelöst. Vorteilhafte Ausgestaltungen und Weiterbildungen ergeben sich aus den hiervon abhängigen Unteransprüchen. Im Anspruch 11 ist außerdem eine besonders bevorzugte Verwendung eines derartigen Tankventils angegeben.

Das erfindungsgemäße Tankventil weist, ähnlich wie die Tankventile gemäß dem Stand der Technik, einen Grundkörper auf, in welchen mehrere Funktionsuntergruppen zur Betankung des Druckgasbehälters, zur Entnahme von Gas aus dem Druckgasbehälter sowie zur Umsetzung von Sicherheitsfunktionen integriert sind. Ein erster Grundkörperabschnitt ragt dabei in das Innere des Druckgasbehälters und ist insbesondere über ein Gewinde mit einer korrespondierenden Aufnahme in dem Druckgasbehälter, im montierten Zustand dichtend mit diesem verbunden. Erfindungsgemäß ist es nun so, dass einzelne Funktionsuntergruppen in oder an dem ersten Grundkörperabschnitt angeordnet sind. Die Funktionsuntergruppen können dabei insbesondere sicherheitsrelevante Funktionsuntergruppen sein. Durch ihre Anordnung im ersten Grundkörperabschnitt oder in Richtung des Inneren des Druckgasbehälters an diesen montiert sind sie auch im Falle einer Beschädigung des Druckgasbehälters mit dem aufgeschraubten Tankventil vergleichsweise sicher. Dies ist insbesondere dann von Vorteil, wenn der Druckgasbehälter mit dem aufgeschraubten Tankventil beispielsweise in einem Fahrzeug eingesetzt wird, und durch einen Unfall in Mitleidenschaft gezogen wird. Der Druckgasbehälter selbst ist dabei typischerweise sehr stabil, vor allem die Aufnahmeeinrichtung, mit welcher das Tankventil verbunden, in den allermeisten Fällen verschraubt, ist. Der erste Grundkörperabschnitt, welcher innerhalb des Druckgasbehälters und zu einem großen Teil seiner Ausdehnung innerhalb der Aufnahmeeinrichtung des Druckgasbehälters für das Tankventil liegt, ist dementsprechend gut geschützt, sodass selbst bei einer Beschädigung des Tankventils und beispielsweise einem Abscheren des zweiten Grundkörperabschnitts des Tankventils vom ersten Grundkörperabschnitt die in dem ersten Grundkörperabschnitt angeordneten Funktionsuntergruppen unbeschädigt bleiben. Dieser gute Schutz ist insbesondere bei Fahrzeuganwendungen ein entscheidender Vorteil für die Sicherheit.

Prinzipiell können mehrere der Funktionsuntergruppen in dem ersten Grundkörperabschnitt angeordnet sein. Der dort zur Verfügung stehende Bauraum ist aufgrund der typischerweise beengten Platzverhältnisse im Inneren der Aufnahmeeinrichtung und des notwendigen Materials des ersten Grundkörperabschnitts, um eine ausreichende Stabilität des Tankventils sicherzustellen begrenzt. Daher können in diesem Bereich des ersten Grundkörperabschnitts insbesondere die sicherheitsrelevanten Funktionsuntergruppen angeordnet sein.

In dem ersten Grundkörperabschnitt ist zumindest ein Rückschlagventil in dem Betankungspfad oder in einer diesen innerhalb des Grundkörpers ausbildenden Betankungsleitung vorgesehen. Ein solches Rückschlagventil in einer Betankungsleitung stellt sicher, dass die Betankungsleitung, wenn sie nicht verwendet wird, von dem in dem Druckgasspeicher unter Druck stehenden Gas verschlossen wird. Hierfür ist typischerweise ein Rückschlagventil mit einer zusätzlichen Federunterstützung entgegen der Strömungsrichtung bei der Betankung vorgesehen. Dieses sicherheitsrelevante Bauteil kann nun im ersten Grundkörperabschnitt angeordnet sein, sodass es sehr sicher untergebracht ist.

Ferner ist vorgesehen, dass die Funktionsuntergruppen in dem ersten Grundkörperabschnitt eine Rohrbruchsicherung in dem Entnahmepfad umfassen. Eine solche Rohrbruchsicherung stellt sicher, dass im Falle eines Bruchs oder eines Defekts der Rohrleitung diese verschlossen wird. Sie kann insbesondere aus einer Ventileinrichtung bestehen, welche in Abhängigkeit eines Differenzdrucks zwischen der einen dem Inneren des Druckgasbehälters zugewandten Seite und der anderen der Abströmseite einer Entnahmeleitung zugewandten Seite wirkt. Liegt auf der Seite des Entnahmepfads kein Druck mehr vor oder senkt sich dieser rapide ab, beispielweise weil die Leitung oder ein in der Leitung angeordnetes Ventil beschädigt oder abgeschert wird, dann verschließt die Rohrbruchsicherung mit einem Ventilkörper das Rohr und verhindert so das Abströmen von Gas aus dem Druckgasbehälter. Auch dieses sicherheitsrelevante Bauteil kann nun insbesondere im Inneren des Druckgasbehälters und damit an oder im ersten Grundkörperabschnitt des Tankventils angeordnet sein.

Gemäß einer weiteren sehr günstigen Ausgestaltung der Idee kann es ferner vorgesehen sein, dass die Funktionsuntergruppen im ersten Grundkörperabschnitt eine starre Blende in einem zu oder von einem Sicherheitsventil führenden Leitungselement umfassen. Typischerweise weisen Tankventile Sicherheitsventile, beispielsweise thermisch auslösende Sicherheitsventile, auf. Über diese Sicherheitsventile wird, für den Fall, dass diese ansprechen, Gas aus dem Inneren des Druckgasbehälters abgeblasen, um einen extremen Überdruck und die Gefahr einer Explosion des Druckgasbehälters zu vermeiden. Dies kann beispielsweise beim Auftreten von Feuer der Fall sein. Um ein unkontrolliertes Abströmen auch für den Fall, dass das Tankventil selbst beschädigt und beispielsweise das Sicherheitsventil, welches in dem zweiten Grundkörperabschnitt angeordnet sein kann, von dem ersten Grundkörperabschnitt abgetrennt wird, kann gemäß dieser vorteilhaften Weiterbildung der Idee eine starre Blende in dem ersten Grundkörperabschnitt vorgesehen sein. Über diese starre Blende wird konstruktionsbedingt das Volumen des abströmenden Gases begrenzt, sodass das Gas aus dem Inneren des Druckgasbehälters mit einem vergleichsweise kontrollierten Volumenstrom abströmt und nicht unkontrolliert in die Umgebung gelangt.

In einer weiteren, sehr vorteilhaften Variante des erfindungsgemäßen Tankventils kann es nun außerdem vorgesehen sein, dass ein Sicherheitsventil, insbesondere ein thermisch auslösendes Sicherheitsventil, wie im vorherigen Absatz beschrieben, in den ersten Grundkörperabschnitt integriert oder in Richtung des Tankinneren an diesem montiert ist. Für das hinsichtlich der Sicherheit wichtige Sicherheitsventil, insbesondere das wichtige thermisch auslösende Sicherheitsventil, stellt dies einen weiteren Sicherheitsvorteil im Falle einer Beschädigung des Tankventils, beispielsweise durch ein Abscheren des zweiten Grundkörperabschnitts, welcher im montierten Zustand des Tankventils außerhalb des Druckgasspeichers liegt, dar. Da der Grundkörper gemäß einer idealen Ausgestaltung aus einem gut wärmeleitenden metallischen Material wie beispielsweise Aluminium ausgebildet ist, wird im Falle einer erhöhten Temperatur beispielsweise durch einen Brand, die Wärme über den Grundkörper zuverlässig in den Bereich des thermisch auslösenden Sicherheitsventils geleitet, sodass seine Integration in den ersten Grundkörperabschnitt 5.1 Vorteile hinsichtlich der Sicherheit und keine nennenswerte Nachteile hinsichtlich der Auslösung mit sich bringt.

Gemäß einer weiteren sehr vorteilhaften Idee der Erfindung kann es nun ferner vorgesehen sein, dass weitere Funktionsuntergruppen in dem zweiten Grundkörperabschnitt angeordnet sind. Dabei kann es vorgesehen sein, dass alle in dem zweiten Grundkörperabschnitt, also dem im montierten Zustand außerhalb des Druckgasbehälters liegenden Abschnitt des Grundkörpers, angeordneten Funktionsuntergruppen in einer Ebene angeordnet sind. Diese Anordnung in einer Ebene bezieht sich dabei auf die primäre axiale Ausrichtung und die Betätigungsrichtung der einzelnen Funktionsuntergruppen. Insbesondere können die Funktionsuntergruppen so ausgestaltet sein, sodass sie mit dem Grundkörper verschraubt werden können. Die Mittelachsen der Bohrungen in dem Grundkörper mit den Gewinden zur Aufnahme derartiger Funktionsuntergruppen sind bei dem erfindungsgemäßen Tankventil dabei in einer einzigen Ebene des Grundkörpers angeordnet. Diese Integration aller Funktionsuntergruppen in dem zweiten Grundkörperabschnitt innerhalb einer einzigen Ebene ermöglicht einen sehr kompakten Aufbau des zweiten Grundkörperabschnitts. Dieser kann beispielsweise beim Einsatz in einem Druckgasbehälter zur Speicherung von Wasserstoff bei einem Nenndruck von 70 MPa so ausgestaltet werden, dass er eine Dicke von lediglich ca. 25 bis 35 mm aufweist. Hierdurch ist ein außerordentlich kompakter Aufbau des erfindungsgemäßen Tankventils möglich.

Gemäß einer sehr vorteilhaften Weiterbildung der Idee ist die Ebene dabei senkrecht zu einer zentralen Achse des ersten Grundkörperabschnitts und insbesondere zu einer zentralen Achse des Druckgasbehälters angeordnet. Der erste Grundkörperabschnitt weist typischerweise eine zentrale Achse auf, welche im Allgemeinen mit der zentralen Achse des Druckgasbehälters zusammenfällt, da der erste Grundkörperabschnitt typischerweise mit einer zentralen Aufnahme des Druckgasbehälters verschraubt ist. Zu dieser zentralen Achse, also der Drehachse des Tankventils beim Einschrauben in den Druckgasbehälter, ist die Ebene, welche die Funktionsuntergruppen des zweiten Grundkörperabschnitts aufweist, senkrecht angeordnet. Hierdurch ist ein außerordentlich kompakter Aufbau möglich, bei welchem die axiale Länge des Druckgasbehälters mit montiertem Tankventil außerordentlich klein ist. Insbesondere bei der Verwendung zur Speicherung von Brennstoff in einem Fahrzeug ist dies ein erheblicher Vorteil, da der zur Verfügung stehende Bauraum so in der Art ausgenutzt werden kann, dass das maximale Speichervolumen des Druckgasbehälters realisiert werden kann. Hierdurch lässt sich eine entsprechend große Reichweite des Fahrzeugs erreichen. Insbesondere kann die Reichweite gegenüber der Verwendung von herkömmlichen Tankventilen bei unverändertem in dem Fahrzeug zur Verfügung stehenden Bauraum durch eine Vergrößerung des Volumens des Druckgasbehälters gesteigert werden.

Gemäß einer sehr günstigen Weiterbildung der Idee sind die Funktionsuntergruppen dabei parallel und/oder sternförmig in dem zweiten Grundkörperabschnitt angeordnet. Innerhalb der Ebene sind die Funktionsuntergruppen also parallel und/oder sternförmig in dem zweiten Grundkörperabschnitt angeordnet. Dies ermöglicht auch hinsichtlich des Bauraums in radialer Richtung, bezogen auf eine zentrale Achse der Ebene, eine sehr kompakte Anordnung. Dies reduziert auch in dieser Richtung den benötigten Bauraum und dient insbesondere auch zur Gewichtseinsparung, da der Grundkörper entsprechend kompakt und mit weniger Material realisiert werden kann. Darüber hinaus erledigt diese Anordnung ein sehr einfaches und effizientes Bohren der Aufnahmen für die Funktionsuntergruppen sowie der in dem zweiten Grundkörperabschnitt verlangenden Kanäle.

Wie bereits erwähnt können die Funktionsuntergruppen, und so ist es gemäß einer vorteilhaften Weiterbildung des erfindungsgemäßen Tankventils auch vorgesehen, mit dem Grundkörper verschraubt ausgebildet sein.

Eine weitere sehr günstige Ausgestaltung des erfindungsgemäßen Tankventils sieht es nun ferner vor, dass der Grundkörper aus einer Aluminiumlegierung hergestellt ist. Gemäß einer vorteilhaften Weiterbildung kann er insbesondere geschmiedet sein. Eine solche Herstellung des Grundkörpers aus einer Aluminiumlegierung, insbesondere als Schmiedebauteil, ist einfach, kostengünstig, erlaubt die Herstellung eines hochfesten sowie gleichzeitig leichten Bauteils. Die Funktionsuntergruppen können dann typischerweise aus einem nicht rostenden Stahlmaterial ausgebildet verschraubt sein.

Gemäß einer weiteren sehr vorteilhaften Ausgestaltung des erfindungsgemäßen Tankventils können dabei in dem zweiten Grundkörperabschnitt zumindest einige der folgenden Funktionsuntergruppen integriert sein:
- Entnahmeventil, insbesondere in Form eines Pilotventils, welches vorzugsweise elektromagnetisch betätigbar ist;
- Sicherheitsventil, insbesondere ein thermisch auslösendes Sicherheitsventil, sofern dieses nicht bereits in den ersten Grundkörperabschnitt angeordnet beziehungsweise an diesem montiert ist;
- ein Absperrventil, vorzugsweise ein manuell betätigbares Absperrventil;
- Entleerventil, insbesondere ein manuell betätigbares Entleerventil;
- Filter, insbesondere Einlassfilter;
- ein Gasanschluss zur Betankung und/oder Entnahme von Gas;
- ein Abblasanschluss, welcher insbesondere mit einem Leitungselement verbindbar ist, welches zur Abfuhr von Gas dient, das über das Sicherheitsventil und/oder das Entleerventil entweicht.

Weitere an sich bekannte Funktionsuntergruppen, welche dem Fachmann grundlegend bekannt sind, können ebenfalls im Bereich des zweiten Grundkörperabschnitts integriert ausgebildet sein.

Wie bereits mehrfach erwähnt, liegt der entscheidende Vorteil des Tankventils in einer sehr hohen Sicherheit auch für den Fall, dass es zu einer Beschädigung des Tankventils, beispielsweise infolge eines Unfalls, kommt. Dieser Vorteil wirkt sich insbesondere bei Fahrzeuganwendungen entsprechend vorteilhaft aus. Deshalb ist eine Verwendung des Tankventils gemäß Anspruch 10 an einem Druckgasbehälter zur Speicherung von Wasserstoff oder Erdgas, und hier insbesondere bei einem Nenndruck von mehr als 65 MPa, als Brennstoff in einem Fahrzeug vorgesehen.

Weitere vorteilhafte Ausgestaltungen des erfindungsgemäßen Tankventils sowie seiner Verwendung ergeben sich außerdem aus den weiteren abhängigen Unteransprüchen sowie aus dem Ausführungsbeispiel, welches nachfolgend unter Bezugnahme auf die Figuren näher beschrieben ist.

Dabei zeigen:
- Fig. 1: ein prinzipmäßig dargestelltes Fahrzeug mit einem Speichersystem für komprimiertes Gas als Brennstoff;
- Fig. 2: eine dreidimensionale Darstellung einer möglichen Ausführungsform eines Tankventils gemäß der Erfindung;
- Fig. 3: eine schematische Darstellung eines Teils eines Druckgasbehälters mit montiertem Tankventil;
- Fig. 4: eine schematische Schnittdarstellung gemäß der Linie IV-IV in Fig. 3;
- Fig. 5: eine schematische Schnittdarstellung durch den im montiertem Zustand in den Druckgasbehälter ragenden Bereich eines Tankventils gemäß der Erfindung; und
- Fig. 6: eine schematische Schnittdarstellung durch den im montiertem Zustand in den Druckgasbehälter ragenden Bereich eines Tankventils gemäß der Erfindung und gemäß einer alternativen Ausführungsform der Erfindung; und
- Fig. 7: eine schematische Darstellung der Funktionsweise eines erfindungsgemäßen Tankventils mit allen seinen Funktionsuntergruppen in einem pneumatischen Fließbild.

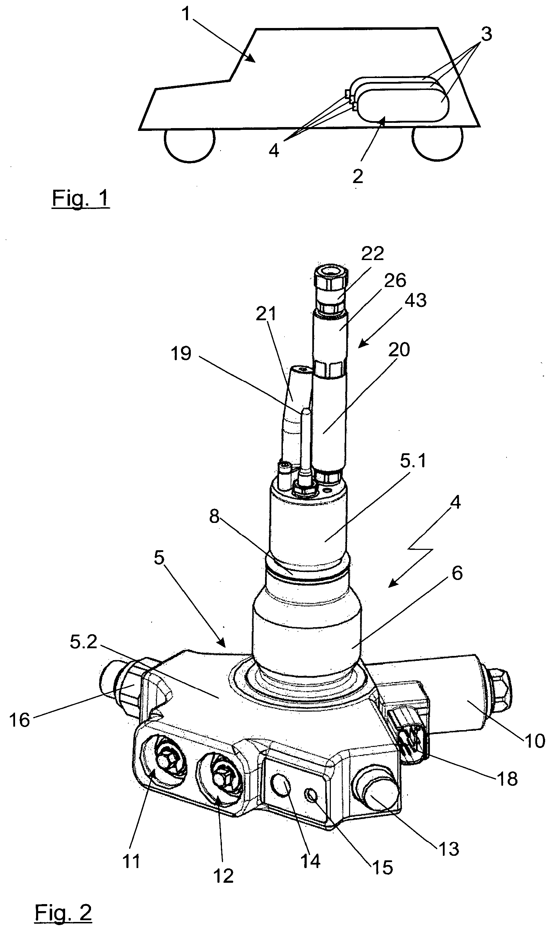

In der Darstellung der Figur 1 ist rein beispielhaft ein Fahrzeug 1 angedeutet. Dieses soll mit einem gasförmigen Brennstoff, beispielsweise mit komprimiertem Erdgas oder komprimiertem Wasserstoff, angetrieben werden. Der Brennstoff kann dazu in einem Verbrennungsmotor oder insbesondere bei der Verwendung von Wasserstoff vorzugsweise auch in einem Brennstoffzellensystem in die für den Antrieb genutzte Leistung umgesetzt werden. Zur Speicherung des komprimierten Gases ist in dem Fahrzeug 1 eine in ihrer Gesamtheit mit 2 bezeichnete Speichervorrichtung vorhanden. Diese besteht aus mehreren einzelnen Druckgasbehältern 3, von denen jeder ein Tankventil 4 trägt. Dieses Tankventil 4 wird auch als On-Tank-Valve oder abgekürzt als OTV bezeichnet. Die einzelnen Druckgasbehälter 3 können dabei zusammen mit ihren Tankventilen 4 beispielsweise so wie es aus dem eingangs erwähnten Stand der Technik bekannt ist, über eine gemeinsame Leitung miteinander verbunden sein, sodass Gas aus der Speichervorrichtung 2 in dem Fahrzeug genutzt werden kann. Insbesondere bei der Speicherung von Wasserstoff, beispielsweise für die bevorzugte Anwendung in einem Brennstoffzellensystem, liegt dabei der Nenndruck bei derartigen Druckgasbehältern 3 mit ihren Tankventilen 4 typischerweise in der Größenordnung von 70 MPa. Neben den Sicherheitsanforderungen an die einzelnen Druckgasbehälter 3 sowie ihre Tankventile 4 müssen außerdem hohe Anforderungen hinsichtlich der Dichtheit aber auch hinsichtlich der Möglichkeit, diese sicher, zuverlässig und kostengünstig herzustellen, gestellt werden.

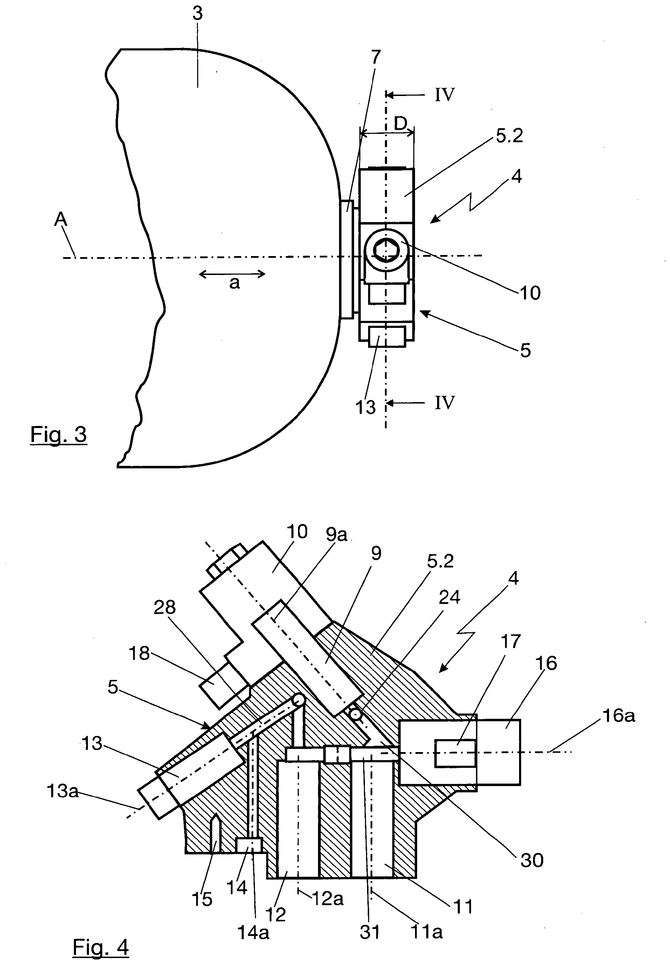

In der Darstellung der Figur 2 ist eine dreidimensionale Darstellung eines Tankventils 4 zu erkennen. Das Tankventil 4 umfasst dabei einen Grundkörper 5, welcher im Wesentlichen aus zwei Abschnitten besteht. Ein erster Grundkörperabschnitt 5.1 ist so ausgebildet, dass er im späteren montierten Zustand des Tankventils 4 in den jeweiligen Druckgasbehälter 3 ragt. Er weist dafür in dem hier dargestellten Ausführungsbeispiel ein mit 6 bezeichnetes Gewinde auf, welches mit einem entsprechenden Gewinde in einem Aufnahmeelement 7, welches in der Darstellung der Figur 3 teilweise angedeutet ist, des Druckgasbehälters 3 entsprechend zusammenwirkt. Dieser erste Grundkörperabschnitt 5.1 weist außerdem eine in der Darstellung der Figur 2 angedeutete Dichteinrichtung beispielsweise aus einem oder mehreren Dichtringen und/oder Stützringen auf. Ein zweiter Grundkörperabschnitt 5.2 ist in der Darstellung der Figur 2 im unteren Bereich des Tankventils 4 zu erkennen. Dieser zweite Grundkörperabschnitt 5.2 befindet sich nach der Montage des Tankventils 4 außerhalb des Druckgasbehälters 3, wie es beispielsweise in der in Figur 3, in einer schematischen Seitenansicht, angedeuteten Art. Der zweite Grundkörperabschnitt 5.2 weist dabei mehrere sogenannte Funktionsuntergruppen des Tankventils 4 auf. Die Funktionsuntergruppen im zweiten Grundkörperabschnitt 5.2 umfassen dabei ein elektromagnetisch betätigtes Pilotventil 9 als Entnahmeventil zur Entnahme von Gas aus dem Druckgasbehälter 3. Es wird über eine mit 10 bezeichnete elektromagnetische Spule betätigt, wobei in der Darstellung der Figuren 2 und 3 lediglich die elektromagnetische Spule 10 zu erkennen ist. In der Darstellung der Figur 4 ist das Pilotventil 9 selbst schematisch angedeutet. Hinsichtlich der Funktionalität eines solchen Pilotventils kann beispielhaft auf die Ausführungen in der DE 10 2013 019 978 A1 der Anmelderin hingewiesen werden.

In der Darstellung der Figur 2 sind weitere in den zweiten Grundkörperabschnitt 5.2 integrierte beziehungsweise an diesen in Richtung des Inneren des Druckgasbehälters 3 montierte Funktionsuntergruppen zu erkennen. Diese sind beispielsweise zwei parallel zueinander angeordnete manuelle Ventile 11, 12, wobei das manuelle Ventil 11 als manuelles Absperrventil 11 ausgebildet und das manuelle Ventil 12 als manuelles Entleerventil 12 ausgestaltet ist. Das manuelle Absperrventil 11 und das manuelle Entleerventil 12 sind in der Darstellung der Figur 4 ebenfalls nochmals angedeutet. Sie können insbesondere so aufgebaut sein, dass sie in ihrem Aufbau identisch realisiert sind. Der Einbau erfolgt dabei so, dass das manuelle Absperrventil 11 im Einbauzustand und Normalzustand geöffnet und das manuelle Entleerventil 12 im Einbauzustand und im Normalzustand entsprechend geschlossen ist. Auf Details in der Funktionsweise wird dabei später im Rahmen der Beschreibung der Darstellung in Figur 4 näher eingegangen.

Als weitere Funktionsuntergruppe in dem zweiten Grundkörperabschnitt 5.2 ist nun außerdem der Teil eines thermisch auslösenden Sicherheitsventils 13 zu erkennen. Solche thermisch auslösenden Sicherheitsventile sind prinzipiell aus dem allgemeinen Stand der Technik bekannt. In einer üblichen Ausführungsform wird hier eine Schraube eingesetzt, welche eine zentrale Bohrung aufweist, In der zentralen Bohrung befindet sich ein Lot oder ein über ein Lot festgehaltener Sperrkörper. Erhitzt sich der Bereich des Tankventils 4 bzw. des thermisch auslösenden Sicherheitsventils 13 über die Schmelztemperatur des Lots hinaus, dann wird die Durchgangsbohrung in der Schraube freigegeben und das mit der Schraube in dauerhafter Verbindung stehende Gas im Inneren des Druckgasbehälters 13 kann abströmen. Eine Alternative hierzu, welche insbesondere im europäischen und amerikanischen Markt sehr häufig eingesetzt wird, besteht in einem Aufbau, bei welchem ein Ventilkörper von einer Glasampulle mit einer leicht siedenden Flüssigkeit in Position gehalten wird. Der Siedepunkt der Flüssigkeit in der Glasampulle ist so abgestimmt, dass diese bei einer kritischen Temperatur des thermisch auslösenden Sicherheitsventils 13 beginnt zu sieden. Durch die Volumenzunahme beim Sieden wird die Glasampulle zerstört und gibt den Ventilkörper gegenüber dem Ventilsitz frei. Durch den Druck des Gases in dem Druckgasbehälter, welcher an dem Ventilkörper ansteht, wird dieser in eine geöffnete Position, weg von dem Ventilsitz, bewegt, sodass das Gas aus dem Druckgasbehälter 3 abströmen kann. Hierfür dient in der Darstellung der Figuren 2 und 4 eine mit 14 bezeichnete Abblasleitung, welche bei einem Ansprechen des thermisch auslösenden Sicherheitsventils 13 mit dem Inneren des Druckgasbehälters 3 verbunden wird. Neben der Abblasleitung 14 bzw. ihrer Öffnung im zweiten Grundkörperabschnitt 5.2 des Tankventils 4 liegt eine in den Figuren mit 15 bezeichnete Gewindebohrung, welche zur Aufnahme einer Schraube geeignet ist. Hier kann eine sogenannte Abblasleitung bzw. Venting Tube einfach und zuverlässig angeschraubt werden, beispielsweise in der Art, wie es in der deutschen Patentanmeldung DE 10 2013 015 515 A1 der Anmelderin beschrieben ist.

Als weitere Funktionsuntergruppe im Bereich des zweiten Grundkörperabschnitts 5.2 ist in der Darstellung der Figur 2 ein Gasanschluss 16 zu erkennen. Dieser Gasanschluss kann beispielsweise zur Entnahme von Gas aus dem Druckgasbehälter über das Pilotventil 9 und/oder zur Betankung des Druckgasbehälters 3 verwendet werden. In der Darstellung der Figur 4 ist außerdem zu erkennen, dass integriert in den Gasanschluss 16, ein mit 17 bezeichneter Filter angeordnet ist, welcher insbesondere bei der Verwendung des Gasanschlusses 16 zur Betankung des Druckgasbehälters 3 Verschmutzungen in dem in den Druckgasbehälter 3 strömenden Gas aus diesem herausfiltert.

Ein weiteres in der Darstellung der Figur 2 erkennbares Element im Bereich des zweiten Grundkörperabschnitts 5.2 bzw. im Bereich der elektromagnetischen Spule 10 ist dabei ein mit 18 bezeichneter Steckanschluss, über welchen einerseits die elektromagnetische Spule 10 und damit das Pilotventil 9 und andererseits Messdaten, beispielsweise die eines mit 19 bezeichneten Temperatursensors, übertragen werden können. Insbesondere weist das Tankventil 4 dabei den elektrischen Steckanschluss 18 als einzigen elektrischen Anschluss auf, sodass die Verkabelung der Speichervorrichtung 2 entsprechend einfach und effizient zu gestalten ist.

Neben dem Temperatursensor 19 ist im Bereich des ersten Grundkörperabschnitts 5.1 außerdem ein auf diesem in Richtung des Inneren des Druckgasbehälters 3 montierter leicht gebogener Rohrabschnitt 21 zu erkennen. Seine Ausgestaltung ist dabei so gewählt, dass er das einströmende Gas bei der Betankung des Druckgasbehälters 3 möglichst so in den Druckgasbehälter 3 verteilt, dass es zu einer Durchmischung des Gases und damit einer zuverlässigen Messung der Temperatur durch den Temperatursensor 19 kommt. Eine Austrittsöffnung 42 des gebogenen Rohrabschnitts 21 ist dabei idealerweise gegenüber des Nenndurchmessers im Strömungsquerschnitt verengt, um eine Strahlbildung des in den Druckgasbehälter 3 einströmenden Gases zu unterstützen. Damit wird eine bessere Vermischung des Gases mit dem im Inneren des Druckgasbehälters befindlichen Restgas erzielt, sodass insgesamt eine homogenere Temperaturverteilung erreicht wird. Dies kommt der zuverlässigen Messung der Temperatur durch den Temperatursensor 19 zugute.

In der Figur 2 ist außerdem zu erkennen, dass auf dem ersten Grundkörperabschnitt 5.1 eine insgesamt mit 43 bezeichnetes Bauteil montiert ist, welches nachfolgend auch als Zusammenbaufilter 43 bezeichnet wird. Dieser Zusammenbaufilter umfasst dabei einen Filter 20, sowie eine Rohrbruchsicherung 22 und ein Rückschlagventil 26. Die Rohrbruchsicherung 22 sowie das Rückschlagventil 26 sind dabei einige der Funktionsuntergruppen, welche in dem Ausführungsbeispiel der Figur 2 nicht in den ersten Grundkörperabschnitt 5.2 integriert, sondern auf diesen aufmontiert sind. Die Funktionalität dieser beiden Funktionsuntergruppen, der Rohrbruchsicherung 22 und das Rückschlagventil 26, wird nachfolgend an ihrem ebenso denkbaren integrierten Aufbau noch im Detail beschrieben.

Weitere Funktionsuntergruppen können dabei auch im Inneren des ersten Grundkörperabschnitts 5.1 integriert ausgeführt sein.

Die Funktionsuntergruppen, welche nach der Montage des Tankventils 4 im Inneren des Druckgasbehälters 3 entsprechend geschützt angeordnet sind, umfassen dabei zumindest die Rohrbruchsicherung 22 sowie ein Rückschlagventil 23 in einer Betankungsleitung 24, welche in den Rohrabschnitt 21 mündet. Ferner kann in dem Entnahmepfad, welcher die Rohrbruchsicherung 22 aufweist, ein weiteres Rückschlagventil 26 angeordnet sein, welches sicherstellt, dass im Fall einer Betankung das Gas über die Betankungsleitung 24 und den Rohrabschnitt 21 in den Druckgasbehälter 3 einströmt, und dass im Falle einer Entnahme von Gas über das Pilotventil 9 die Strömung durch den Filter 20 und die Entnahmeleitung 25 erfolgt. Über das Rückschlagventil 26 wird also faktisch bei deaktiviertem Pilotventil 9 ausgewählt, ob die Strömung des Gases durch die Betankungsleitung 24 oder durch die Entnahmeleitung 25 erfolgt. Das Rückschlagventil 26 könnte somit auch als Auswahlventil für den Strömungsweg bezeichnet werden

Wie bereits erwähnt, können das Rückschlagventil 26, die Rohrbruchsicherung 22 sowie der Filter 20 als Zusammenbaufilter integriert und in Richtung des Inneren des Druckgasbehälters 3 an den ersten Grundkörperabschnitt 5.1. anmontiert werden. In Strömungsrichtung des Gases bei der Entnahme liegen die beiden Ventileinrichtungen 22, 26 dabei vor dem Filter 20, sodass eventuell im Bereich der Ventileinrichtungen 22, 26 abgeriebene Partikel von dem Filter 20 zurückgehalten werden und nicht in den Bereich des Pilotventils 9 gelangen können.

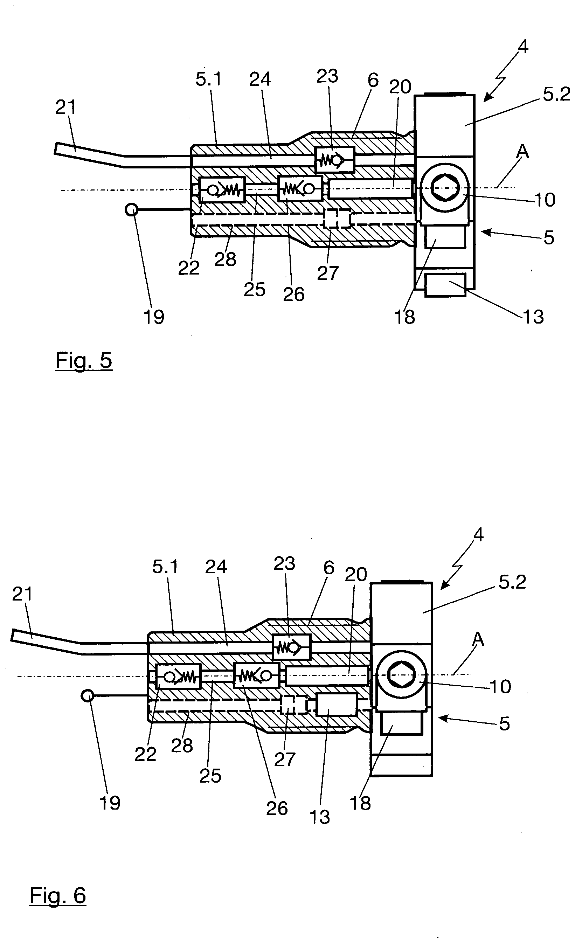

Alternativ dazu können diese Bauteile auch in den Grundkörperabschnitt 5.1 integriert ausgeführt werden, wie es in der Darstellung der Figur 5 teilweise angedeutet ist.

In der Darstellung der Figur 5 ist ferner eine gestrichelt optionale weitere Funktionsuntergruppe in Form einer starren Blende 27 in angedeutete einem zu dem thermisch auslösenden Sicherheitsventil 13 führenden Leitungselement 28 zu erkennen. Das Leitungselement 28 ist dabei ohne weitere Ventileinrichtungen am einen Ende des ersten Grundkörperabschnitts 5.1 mit dem Inneren des Druckgasbehälters 3 verbunden. An seinem anderen Ende steht es in Verbindung mit dem thermisch auslösenden Sicherheitsventil 13, sodass auch im Falle einer Fehlfunktion einer weiteren Ventileinrichtung in jedem Fall sichergestellt ist, dass beim Ansprechen des thermisch auslösenden Sicherheitsventils das Gas aus dem Druckgasbehälter 3 wie gewünscht abströmt.

Die alternative Darstellung in Figur 6 zeigt, dass prinzipiell auch das Sicherheitsventil 13 statt in den zweiten Grundkörperabschnitt 5.2 in dem ersten Grundkörperabschnitt 5.1 angeordnet werden kann, beispielsweise in Strömungsrichtung des abströmenden Gases nach der Blende 27, wie in der Darstellung der Figur 6 angedeutet, oder auch in Strömungsrichtung vor der Blende 27 wenn dies hinsichtlich des Bauraums innerhalb des ersten Grundkörperabschnitts 5.1 von Vorteil wäre. Das Sicherheitsventil 13 als Funktionsuntergruppe kann also sowohl in der ersten Grundkörperabschnitt 5.1 integriert werden, wie es in der Darstellung der Figur 6 zu erkennen ist, als auch in dem zweiten Grundkörperabschnitt 5.2 vorgesehen werden, wie es in den Darstellungen der Figuren 2 und 5 erkennbar ist. Nachfolgend wird es daher in beiden Bauvarianten, je nach Ausgestaltung der jeweiligen Figur entsprechend erwähnt.

Die Funktionsuntergruppen 13, 22, 23 und gegebenenfalls 27 sowie ergänzend die Funktionsuntergruppe 26 sind anders als in dem Beispiel gemäß Figur 2 hier in dem ersten Grundkörperabschnitt 5.1 des Tankventils 4 angeordnet. Kommt es bei einer Beschädigung der Speichervorrichtung 2 zur Beeinträchtigung einzelner Druckgasbehälter 3 und ihrer Tankventile 4, dann kann dies insbesondere zu einem Abscheren des Tankventils 4 von dem Druckgasbehälter 3 führen. In diesem Fall würde beispielsweise der zweite Grundkörperabschnitt 5.2 ganz oder teilweise abgeschert. Ohne dass der Druckgasbehälter 3 selbst beschädigt wird, wird typischerweise die erste Funktionsuntergruppe 5.1 im Inneren des Aufnahmeelements 7 des Druckgasbehälters verbleiben, mit welchem er verschraubt ist. Die dort angeordneten Funktionsuntergruppen 13, 22, 23, 27, 26 sind also besonders gut geschützt, was insbesondere bei den sicherheitsrelevanten Funktionsuntergruppen 13, 22 und 23 ein entscheidender Sicherheitsvorteil ist.

Die in dem zweiten Grundkörperabschnitt 5.2 angeordneten Funktionsuntergruppen 9, 11, 12, 13, 14, 16, 17 sowie die mit dem Pilotventil 9 korrespondierende und fluchtend mit ihm zusammenwirkende elektromagnetische Spule 10, in welche ein Teil des Pilotventils 9 entsprechend hineinragt, sind bezüglich ihrer in der Darstellung der Figur 4 jeweils angedeuteten primären axialen Ausrichtung, welche durch die entsprechenden Achsen 9a, 11a, 12a,13a,14a, 16a angedeutet ist, in einer einzigen Ebene, nämlich der in der Darstellung der Figur 4 dargestellten Schnittebene IV-IV, welche auch aus der Darstellung der Figur 3 erkenntlich wird, aufgebaut. Diese Anordnung der in dem zweiten Grundkörperabschnitt 5.2 befindlichen Funktionsuntergruppen 9, 11,12, 13, 14, 16, 17 ermöglicht eine außerordentlich kompakte Anordnung des gesamten Aufbaus in der axialen Richtung a bezogen auf die Achse A, welche in den Figuren 3 und 5 dargestellt ist. Insbesondere beträgt die in der Darstellung der Figur 3 eingezeichnete Dicke D des zweiten Grundkörperabschnitts 5.2 weniger als ca. 40 mm. Der zweite Grundkörperabschnitt 5.2 ist dabei in idealer Weise aus einer Aluminiumlegierung durch Schmieden einstückig zusammen mit dem ersten Grundkörperabschnitt 5.1 aufgebaut. In den Grundkörper werden dann die Funktionsuntergruppen entsprechend integriert. Im ersten Grundkörperabschnitt 5.1 erfolgt dies in der Darstellung der Figur 2 von oben, also von der späteren innerhalb des Druckgasbehälters 3 liegenden Seite her. Die anderen Elemente werden in der in Figur 4 dargestellten Ebene entsprechend montiert, beispielsweise indem die einzelnen Funktionsuntergruppen als vormontierte Elemente in den zweiten Grundkörperabschnitt 5.2 eingeschraubt werden. Die Funktionsuntergruppen sind dabei typischerweise aus hierfür geeigneten Materialien, wie insbesondere nichtrostenden Stählen und im Bereich der Dichtsitze gegebenenfalls auch Kunststoffen, hergestellt. Durch die bereits mehrfach angesprochene Anordnung in der einen Ebene IV-IV lässt sich der gewünschte sehr kompakte Aufbau realisieren.

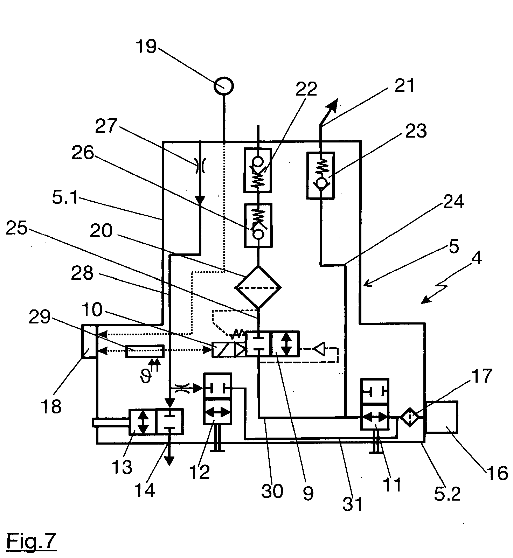

Die Darstellung in der Figur 7 zeigt wiederum angedeutet den Grundkörper 5 des Tankventils 4 mit dem ersten Grundkörperabschnitt 5.1, welcher im montierten Zustand im Inneren des Druckgasbehälters liegt und den zweiten Grundkörperabschnitt 5.2, welcher typischerweise außerhalb des Druckgasbehälters verbleibt. Den Kern des Tankventils 4 bildet dabei das Pilotventil 9 mit seiner elektromagnetischen Spule 10 und einer mit 29 bezeichneten thermoelektrischen Sicherung. Als weitere Funktionsuntergruppen sind das manuelle Absperrventil 11, das manuelle Entleerventil 12, das thermisch auslösende Sicherheitsventil 13 sowie der Gasanschluss 16 und der Filter 17 zu erkennen. Im ersten Grundkörperabschnitt 5.1 befinden sich die Rohrbruchsicherung 22, das Rückschlagventil 23 in der Betankungsleitung 24 sowie das Rückschlagventil 26 in der Entnahmeleitung 25. Wie oben bereits erwähnt und in der Darstellung der Figur 2 zu erkennen, können das Rückschlagventil 26 und die Rohrbruchsicherung 22 auch, bevorzugt zusammen mit dem Filter 20, an den ersten Grundkörperabschnitt 5.1 auf seiner im Inneren des Druckgasbehälters 3 zugewandten Seite als Zusammenbaufilter 43 anmontiert werden.

Die Entnahmeleitung 25, welche in der Darstellung der Figur 4 nicht erkennbar ist, aber im Prinzip von unten in den Bereich des Pilotventils 9 münden würde, steht dann über dem mit 30 in den Figuren 4 und 7 bezeichneten Leitungsabschnitt mit dem Gasanschluss 16 in Verbindung. Dazwischen befindet sich das manuelle Absperrventil 11, welches im Normalfall, so wie es in der Darstellung der Figur 7 zu erkennen ist, geöffnet ist. In der Darstellung der Figur 4 kann das manuelle Absperrventil 11 beispielsweise entlang seiner Achse 11a auf die Querschnittserweiterung des Leitungsabschnitts 30 entsprechend wirken, beispielsweise in dem diese als Ventilsitz für einen nicht dargestellten Ventilkörper des Absperrventils 11 ausgebildet ist. Nach dem manuellen Absperrventil 11 zweigen außerdem die Entnahmeleitung 25 und die Betankungsleitung 24 ab. In der Darstellung der Figur 7 sind außerdem der Rohrabschnitt 21, der Temperatursensor 19 sowie der Filter 20 für die Entnahmeleitung 25 zu erkennen.

Nachfolgend sollen nun die einzelnen Funktionalitäten anhand des in Figur 7 dargestellten Beispiels erläutert werden:
Bei einer Betankung des Druckgasbehälters 3 strömt Gas über den Gasanschluss 16 und den Filter 17 durch das geöffnete manuelle Absperrventil 11. Der Druck steht dann sowohl in der Betankungsleitung 24 als auch am Pilotventil 9 über dem Leitungsabschnitt 30 an. Ferner steht der Druck am normalerweise geschlossenen manuellen Entleerventil 12 über einen mit 31 bezeichneten Leitungsabschnitt an. Der normale Weg des Gases ist nun der, über die Betankungsleitung 24 durch das Rückschlagventil 23, welches vom Druck des Gases geöffnet wird, und durch den Rohrabschnitt 21 in den Druckgasbehälter. Bei Pilotventilen 9 ist eine sichere Abdichtung bei einer Anströmung in Gegenrichtung nicht bzw. bei höherer Druckdifferenz nicht immer zu gewährleisten. Aus diesem Grund befindet sich in der Entnahmeleitung 25, welche über das Pilotventil 29 mit dem Leitungsabschnitt 30 in Verbindung steht, das Rückschlagventil 26, welches verhindert, dass Gas bei der Betankung über die Entnahmeleitung 25 in den Druckgasbehälter 3 strömt. Dies wäre insbesondere deshalb unerwünscht, da einerseits eine sehr starke Durchströmung des Pilotventils entgegen der geplanten Strömungsrichtung zu einer Beschädigung von Elementen des Pilotventils führen könnte. Außerdem würde das Gas über den Filter 20 in einem Bereich aus dem Tankventil 4 austreten, indem dieses sehr direkt in Kontakt mit dem Temperatursensor 19 käme. Der Temperatursensor 19, welcher eines der entscheidenden Abschaltkriterien bei der Betankung des Druckgasbehälters 3 liefert, würde dann unnötig stark abgekühlt, sodass die Betankung im schlimmsten Fall zu früh beendet werden würde.

Im umgekehrten Fall erfolgt die Entnahme von Gas nun so, dass das Rückschlagventil 23, unterstützt durch die angedeutete Feder, sperrt. Das Gas strömt dann in die Entnahmeleitung 25 ein. Es strömt über die im Normalzustand geöffnete Rohrbruchsicherung 22 und das im Entnahmefall geöffnete Rückschlagventil 26 zu dem Filter 20 und von dort zum Pilotventil 9. Die gewünschte Menge an Gas wird durch eine entsprechende elektrische Ansteuerung der elektromagnetischen Spule 10 und über den elektrischen Steckanschluss 18 realisiert. Die gewünschte Entnahmemenge strömt dann wiederum über den Leitungsabschnitt 30 und das im Normalfall geöffnete manuelle Absperrventil 11 zum Gasanschluss 16 und von dort weiter, beispielsweise zu einem Druckregler, und dann in einen Verbrennungsmotor, ein Brennstoffzellensystem, eine Heißgasturbine oder eine sonstige Nutzanwendung.

Über das manuelle Absperrventil 11 kann, wie der Name schon sagt, das Tankventil 4 manuell abgesperrt werden. Hierfür wird es von seiner in Figur 7 dargestellten geöffneten Normalposition in die andere Position bewegt und sperrt somit den Leitungsabschnitt 30 und damit den Entnahmepfad ebenso wie die Betankungsleitung 24 entsprechend ab, indem sie diese vom Gasanschluss 16 trennt. Dies kann beispielsweise im Rahmen einer Wartung, einer Störung oder dergleichen sinnvoll genutzt werden.

Über den Leitungsabschnitt 31 bleibt das manuelle Entleerventil mit dem Gasanschluss 16 verbunden. Es ist in der Darstellung der Figur 7 in seiner normalen geschlossenen Position dargestellt. An seinem anderen Ende ist es mit dem Leitungselement 28 verbunden, welches das Innere des Druckgasbehälters 3 mit dem thermisch auslösenden Sicherheitsventil 13 - welches wie erwähnt auch im ersten Grundkörperabschnitt 5.1 angeordnet sein könnte - verbindet, und welches die angesprochene starre Blende 27 aufweisen kann. Soll der Druckgasbehälter 3 nun entleert werden, dann kann das manuelle Entleerventil von seiner in Figur 7 dargestellten geschlossenen in die geöffnete Position bewegt werden. Das Gas strömt dann über das Leitungselement 28 und das Leitungselement 31 über den Gasanschluss 16 ab.

Ein weiteres denkbares Szenario wäre das Auslösen des thermisch auslösenden Sicherheitsventils 13. Wird beispielsweise eine Glasampulle mit leicht siedender Flüssigkeit in dem thermisch auslösenden Sicherheitsventil 13 zerstört, dann wechselt dieses, wie oben bereits beschrieben worden ist, von seiner in Figur 7 dargestellten normalerweise geschlossenen Position in die andere geöffnete Position. Über das Leitungselement 28 kann das Gas dann zur Abblasleitung 14 strömen. In diesem Bereich ist typischerweise ein weiteres Leitungselement, eine sogenannte Venting Tube, angeschlossen, welche das Gas, insbesondere bei Fahrzeuganwendungen, in einen unkritischen Bereich abführt. Diesbezüglich kann auf die oben bereits erwähnte deutsche Anmeldung der Anmelderin verwiesen werden.

## Patentansprüche

1. Tankventil (4) zur Montage an einem Druckgasbehälter (3), mit einem Grundkörper (5), welcher einen ersten Grundkörperabschnitt (5.1) aufweist, der im montierten Zustand in den Druckgasbehälter (3) ragt und dichtend mit diesem verbunden ist, und welcher einen zweiten Grundkörperabschnitt (5.2) aufweist, der im montiertem Zustand außerhalb des Druckgasbehälters (3) verbleibt, ferner mit mehreren Funktionsuntergruppen (9, 11, 12, 13, 14, 16, 17, 22, 23, 26, 27) zur Betankung des Druckgasbehälters (3) über einen Betankungspfad, zur Entnahme von Gas aus dem Druckgasbehälter (3) über einen Entnahmepfad sowie zur Umsetzung von Sicherheits- und Bedienfunktionen, wobei wenigstens einige der Funktionsuntergruppen (9, 11, 12, 13, 14, 16, 17, 22, 23, 26, 27) zumindest teilweise in dem Grundkörper (5) angeordnet sind,
wobei in dem ersten Grundkörperabschnitt (5.1) oder auf der dem Inneren des Druckgasbehälters (3) zugewandten Seite an dem ersten Grundkörperabschnitt (5.1) Funktionsuntergruppen (13, 22, 23, 26, 27) angeordnet sind, welche in oder an dem ersten Grundkörperabschnitt (5.1) ein Rückschlagventil (23) in dem Betankungspfad umfassen und in oder an dem ersten Grundkörperabschnitt (5.1) eine Rohrbruchsicherung (22) in dem Entnahmepfad umfassen,
**dadurch gekennzeichnet, dass**
die Funktionsuntergruppen (13, 22, 23, 26, 27) in dem ersten Grundkörperabschnitt (5.1) eine starre Blende (27) in einem zu oder von einem Sicherheitsventil (13) führenden Leitungselement (28) umfassen.

2. Tankventil (4) nach Anspruch 1,
**dadurch gekennzeichnet, dass**
die Funktionsuntergruppen (13, 22, 23, 26, 27) in oder an dem ersten Grundkörperabschnitt (5.1) das Sicherheitsventil, insbesondere ein thermisch auslösendes Sicherheitsventil (13), umfassen.

3. Tankventil (4) nach Anspruch 1,
**dadurch gekennzeichnet, dass**
weitere Funktionsuntergruppen (9, 11 ,12, 13, 14, 16, 17) in dem zweiten Grundkörperabschnitt (5.2) angeordnet sind, wobei alle in dem zweiten Grundkörperabschnitt (5.2) angeordneten Funktionsuntergruppen (9, 11, 12, 13, 14, 16, 17) bezüglich ihrer primären axialen Ausrichtung (9a, 11a, 12a, 13a, 14a, 16a) sowie ihrer Betätigungsrichtung innerhalb einer Ebene (IV-IV) in dem zweiten Grundkörperabschnitt (5.2) angeordnet sind.

4. Tankventil nach Anspruch 3,
**dadurch gekennzeichnet, dass**
die Ebene (IV-IV) senkrecht zu einer zentralen Achse (A) des ersten Grundkörperabschnitts (5.1), und insbesondere des Druckgasbehälters (3), angeordnet ist.

5. Tankventil (4) nach Anspruch 3 oder 4,
**dadurch gekennzeichnet, dass**
die in dem zweiten Grundkörperabschnitt (5.2) angeordneten Funktionsuntergruppen (9, 11, 12, 13, 14, 16, 17) zumindest
- ein Entnahmeventil, insbesondere in Form eines Pilotventils (9), welches vorzugsweise magnetisch betätigbar ist;
- ein Sicherheitsventil, insbesondere ein thermisch auslösendes Sicherheitsventil (13);
- ein Absperrventil, vorzugsweise ein manuell betätigbares Absperrventil (11);
- ein Entleerventil, insbesondere ein manuell betätigbares Entleerventil (12);
- einen Filter (17), insbesondere Einlassfilter;
- einen Gasanschluss (16) zur Betankung und/oder Entnahme von Gas;
- einen Abblasanschluss (14), welcher insbesondere mit einem Leitungselement verbindbar ist, welches zur Abfuhr von Gas dient, das über das Sicherheitsventil und/oder das Entleerventil entweicht,
umfassen.

6. Tankventil (4) nach einem der Ansprüche 1 bis 5,
**dadurch gekennzeichnet, dass**
der Grundkörper (5) aus einer Aluminiumlegierung hergestellt ist.

7. Tankventil (4) nach einem der Ansprüche 1 bis 6,
**dadurch gekennzeichnet, dass**
der Grundkörper (5) durch Schmieden hergestellt ist.

8. Verwendung eines Tankventils (4) nach einem der Ansprüche 1 bis 6,
an einem Druckgasbehälter (3) zur Speicherung von Wasserstoff oder Erdgas, insbesondere bei einem Nenndruck von mehr als 65 MPa, als Brennstoff in einem Fahrzeug (1).

## Claims

1. A tank valve (4) for installation at a pressure gas tank (3), having a base body (5), comprising a first base body section (5.1), which in the assembled state projects into the pressure gas tank (3) and is sealingly connected with the same, and which comprises a second base body section (5.2), which in the assembled state remains outside of the pressure gas tank (3), further having a plurality of functional sub-groups (9, 11, 12, 13, 14, 16, 17, 22, 23, 26, 27) for refueling the pressure gas tank (3) via a refueling path, for the extraction of gas from the pressure gas tank (3) via an extraction path and for implementing safety and operating functions, wherein at least some of the functional sub-groups (9, 11, 12, 13, 14, 16, 17, 22, 23, 26, 27) at least partially are disposed in the base body (5), wherein
in the first base body section (5.1) or on the side facing the interior of the pressure gas tank (3), at the first base body section (5.1) functional sub-groups (13, 22, 23, 26, 27) are disposed,
which in or on the first base body section (5.1) comprise a nonreturn valve (23) in the refueling path and which in or on the first base body section (5.1) comprise a pipe burst protection (22) in the extraction path,
**characterized in that** the functional sub-groups (13, 22, 23, 26, 27) comprise in or on the first base body section (5.1) a rigid cover (27) in a line segment (28) leading to or from a safety valve (13).

2. The tank valve (4) of Claim 1,
**characterized in that**
the functional sub-groups (13, 22, 23, 26, 27) comprise in or on the first base body section (5.1) the safety valve, in particular a thermally actuated safety valve (13).

3. The tank valve (4) of Claim 1,
**characterized in that**
further functional sub-groups (9, 11, 12, 13, 14, 16, 17) are disposed in the second base body section (5.2), wherein all functional sub-groups (9, 11 ,12, 13, 14, 16, 17) disposed in the second base body section (5.2) are situated in relation to their primary axial alignment (9a, 11a, 12a, 13a, 14a, 16a) and their actuation direction within one plane (IV-IV) in the second base body section (5.2).

4. The tank valve of Claim 3,
**characterized in that**
the plane (IV-IV) is situated perpendicular to a central axis (A) of the first base body section (5.1) and, in particular, of the pressure gas tank (3).

5. The tank valve (4) of Claim 3 or 4,
**characterized in that**
the functional sub-groups (9, 11, 12, 13, 14, 16, 17) disposed in the second base body section (5.2) comprise at least
- an extraction valve, in particular in the form of a pilot valve (9), which preferably is magnetically actuatable;
- a safety valve, in particular a thermally actuated safety valve (13);
- a shut-off valve, preferably a manually actuatable shut-off valve (11);
- a drain valve, in particular a manually actuatable drain valve (12);
- a filter (17), in particular an inlet filter;
- a gas connection (16) for refueling with gas and / or extracting gas;
- a discharge connection (14), which in particular is connectable to a line segment serving to discharge gas, which escapes via the safety valve and / or the drain valve.

6. The tank valve (4) of any one of Claims 1 to 5,
**characterized in that**
the base body (5) is manufactured from an aluminum alloy.

7. The tank valve (4) of any one of Claims 1 to 6,
**characterized in that**
the base body (5) is formed by forging.

8. The use of a tank valve (4) of any one of Claims 1 to 6 at a pressure gas tank (3) for storing hydrogen or natural gas as fuel, in particular for a nominal pressure of more than 65 MPa, in a vehicle (1).

## Revendications

1. Soupape de réservoir (4) destinée à être montée sur un contenant de gaz comprimé (3), avec un corps de base (5), lequel présente une première section de corps de base (5.1), qui dépasse dans le contenant de gaz comprimé (3) dans l'état monté et est relié à celui-ci de manière étanche et lequel présente une deuxième section de corps de base (5.2), qui reste à l'extérieur du contenant de gaz comprimé (3) dans l'état monté, avec en outre plusieurs sous-groupes fonctionnels (9, 11, 12, 13, 14, 16, 17, 22, 23, 26, 27) destinés à approvisionner le contenant de gaz comprimé (3) sur un trajet d'approvisionnement, destinés à prélever du gaz provenant du contenant de gaz comprimé (3) sur un trajet de prélèvement ainsi que destinés à mettre en œuvre des fonctions de sécurité et d'utilisation, dans laquelle au moins certains des sous-groupes fonctionnels (9, 11, 12, 13, 14, 16, 17, 22, 23, 26, 27) sont disposés au moins en partie dans le corps de base (5),
dans laquelle des sous-groupes fonctionnels (13, 22, 23, 26, 27) sont disposés dans la première section de corps de base (5.1) ou sur le côté, tourné vers l'intérieur du contenant de gaz comprimé (3), sur la première section de corps de base (5.1), lesquels comprennent dans ou sur la première section de corps de base (5.1) une soupape anti-retour (23) sur le trajet d'approvisionnement et lesquels comprennent sur le trajet de prélèvement un dispositif de sécurité anti-rupture pour tuyauterie (22) dans ou sur la première section de corps de base (5.1),
**caractérisée en ce que**
les sous-groupes fonctionnels (13, 22, 23, 26, 27) comprennent dans la première section de corps de base (5.1) un diaphragme rigide (27) dans un élément d'acheminement (28) menant vers une ou depuis une soupape de sécurité (13) .

2. Soupape de réservoir (4) selon la revendication 1,
**caractérisée en ce que**
les sous-groupes fonctionnels (13, 22, 23, 26, 27) comprennent dans ou sur la première section de corps de base (5.1) la soupape de sécurité, en particulier une soupape de sécurité (13) à déclenchement thermique.

3. Soupape de réservoir (4) selon la revendication 1,
**caractérisée en ce que**
d'autres sous-groupes fonctionnels (9, 11, 12, 13, 14, 16, 17) sont disposés dans la deuxième section de corps de base (5.2), dans laquelle tous les sous-groupes fonctionnels (9, 11, 12, 13, 14, 16, 17) disposés dans la deuxième section de corps de base (5.2) sont disposés dans la deuxième section de corps de base (5.2)à l'intérieur d'un plan (IV-IV) par rapport à leur orientation axiale primaire (9a, 11a, 12a, 13a, 14a, 16a) ainsi qu'à leur direction d'actionnement.

4. Soupape de réservoir selon la revendication 3,
**caractérisée en ce que**
le plan (IV-IV) est disposé de manière perpendiculaire par rapport à un axe central (A) de la première section de corps de base (5.1), et en particulier du contenant de gaz comprimé (3).

5. Soupape de réservoir (4) selon la revendication 3 ou 4,
**caractérisée en ce que**
les sous-groupes fonctionnels (9, 11, 12, 13, 14, 16, 17) disposés dans la deuxième section de corps de base (5.2) comprennent au moins
- une soupape de prélèvement, en particulier sous la forme d'une soupape pilote (9), laquelle peut être actionnée de préférence magnétiquement ;
- une soupape de sécurité, en particulier une soupape de sécurité (13) à déclenchement thermique ;
- une soupape de fermeture, de préférence une soupape de fermeture (11) pouvant être actionnée manuellement ;
- une soupape de vidange, en particulier une soupape de vidange (12) pouvant être actionnée manuellement ;
- un filtre (17), en particulier un filtre d'admission ;
- un raccord de gaz (16) destiné à l'approvisionnement et/ou au prélèvement de gaz ;
- un raccord d'évacuation par soufflage (14), lequel peut être relié en particulier à un élément d'acheminement, lequel sert à évacuer du gaz, qui s'échappe de la soupape de sécurité et/ou de la soupape de vidange.

6. Soupape de réservoir (4) selon l'une quelconque des revendications 1 à 5,
**caractérisée en ce que**
le corps de base (5) est fabriqué à partir d'un alliage en aluminium.

7. Soupape de réservoir (4) selon l'une quelconque des revendications 1 à 6,
**caractérisée en ce que**
le corps de base (5) est fabriqué par forgeage.

8. Utilisation d'une soupape de réservoir (4) selon l'une quelconque des revendications 1 à 6, sur un contenant de gaz comprimé (3) pour stocker de l'hydrogène ou du gaz naturel, en particulier à une pression nominale supérieure à 65 MPa, en tant que combustible dans un véhicule (1).
